# EUROPÄISCHE PATENTANMELDUNG

(11) **EP 1 637 311 A2**
(43) Veröffentlichungstag der Anmeldung: **22.03.2006**
(21) Anmeldenummer: 05020481.7
(22) Anmeldetag: 20.09.2005
(51) Int. Cl.: B29C 51/16

(54) **Verfahren zum Aufbringen elektronischer Produktetiketten auf Tiefziehgegenständen**

(30) Priorität: 20.09.2004 DE 102004045459
(71) Anmelder: HEKUMA GmbH, 85386 Eching (DE)
(72) Erfinder: Bakowsky, Lothar, Dr., 82194 Gröbenzell (DE)
(74) Vertreter: Klingseisen, Franz

(57) **Zusammenfassung**

Die Erfindung betrifft ein Verfahren zum Aufbringen eines elektronischen Etiketts (3) auf einen durch Tiefziehen hergestellten Gegenstand, wobei das elektronische Etikett (3) in die Kavität (2) einer Tiefziehform (1) eingesetzt und danach der Gegenstand durch Tiefziehen einer erwärmten Folie (4) hergestellt wird, wobei während des Tiefziehens der Folie (4) das elektronische Etikett (3) mit dem Umfang des tiefgezogenen Gegenstands verbunden wird.

## Beschreibung

Es ist bekannt, elektronische Produktetiketten, die als Smart Labels bezeichnet werden, auf Verkaufsprodukten aufzubringen, um verschiedene Daten des Artikels durch ein elektronisches Gerät auslesen zu können. Bei derartigen Smart Labels wird durch die Integration passiver Transponder eine digitale Information in den Etiketten gespeichert, die berührungslos ausgelesen werden kann. Derartige Smart Labels werden mit einer Klebeschicht versehen, damit sie auf einem Verkaufsprodukt angebracht werden können.

Bei tiefgezogenen Gegenständen ist es bekannt, ein Smart Label auf dem fertigen Gegenstand durch Kleben anzubringen.

Erfindungsgemäß wird ein Smart Label in eine Tiefziehform eingelegt und danach der Gegenstand, beispielsweise ein Becher, durch Tiefziehen in dieser Form hergestellt, wobei während des Herstellungs- bzw. Tiefziehvorganges eine Verbindung zwischen dem in die Tiefziehform eingelegten Smart Label und dem Tiefziehgegenstand erfolgt.

Die Erfindung wird beispielsweise anhand der Zeichnung näher erläutert. Es zeigen
- Fig. 1: in einer auseinander gezogenen Ansicht die einzelnen Elemente beim Tiefziehen eines Bechers, und
- Fig. 2: einen Querschnitt durch eine Tiefziehform.

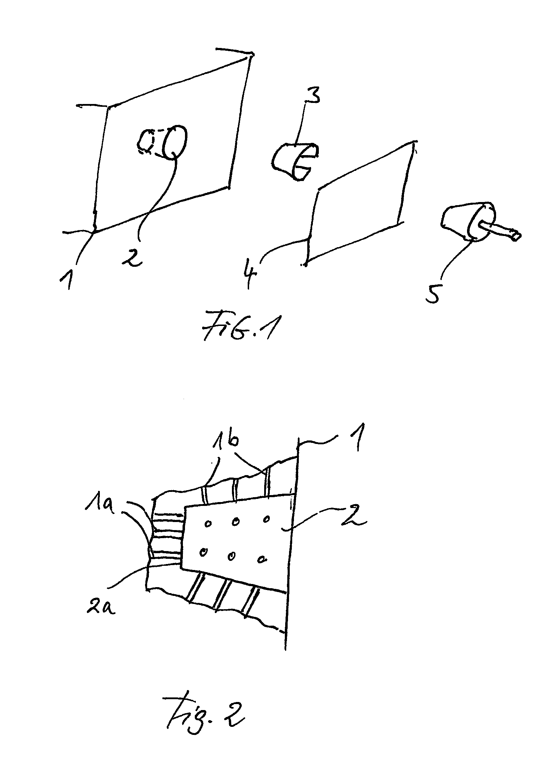

Fig. 1 zeigt schematisch eine Tiefziehform 1 mit einer Kavität 2 entsprechend der Form eines durch Tiefziehen herzustellenden Bechers, der etwa die Form eines Kegelstumpfes haben kann. Mit 3 ist ein Smart Label bezeichnet, das aus einer Folie besteht, in die ein Transponder integriert ist. Dieses Smart Label 3 kann beispielsweise auf einen nicht dargestellten Dom aufgewickelt sein, mittels dem das Smart Label 3 in die Kavität 2 der Tiefziehform 1 so eingebracht wird, dass das Smart Label auf dem Innenumfang der Kavität 2 anliegt. Das Smart Label 3 wird durch Vacuum auf dem nicht dargestellten Dom gehalten. Beim Einsetzen in die Kavität 2 kann Unterdruck über Bohrungen auf dem Umfang der Kavität 2 angelegt werden, um das Smart Label 3 in der Kavität 2 zu fixieren.

Nach Einbringen des Smart Labels 3 in die Kavität 2 wird eine auf eine vorgegebene Temperatur erwärmte Folie 4 auf die Tiefziehform 1 aufgelegt und durch Öffnungen im Boden der Kavität Unterdruck angelegt, sodass die erwärmte Folie 4 zu einem Becher tiefgezogen wird, auf dessen Außenumfang das Smart Label 3 anliegt. Die Verbindung zwischen Label 3 und Folie 4 des tiefgezogenen Bechers wird durch eine Beschichtung des Smart Labels 3 oder ein entsprechendes Material des Labels 3 erreicht.

Vorzugsweise wird eine Siegelschicht auf der dem Becher zugewandten Seite des Smart Labels vorgesehen, die bei einer Erwärmung bis maximal 80° eine gute Haftung des Smart Labels auf dem Becherumfang gewährleistet. Hierdurch wird sichergestellt, dass der in dem Smart Label integrierte Transponder nicht durch Wärmeeinwirkung beschädigt wird. Bei einer Erwärmung des Smart Labels ab etwa 90° besteht die Gefahr, dass der Transponder in dem Smart Label beschädigt wird.

Beim Tiefziehvorgang der Folie 4 kann zusätzlich ein Stempel 5 verwendet werden, der die erwärmte Folie 4 in die Kavität 2 drückt und dadurch den Tiefziehvorgang unterstützt. Nach dem Tiefziehen kann der Becher 3 mit dem auf seinem Umfang haftenden Smart Label 3 in an sich bekannter Weise aus der Kavität 2 der Tiefziehform 1 entnommen werden.

Die das Smart Label 3 bildende Folie wird in dem Bereich um den in die Folie integrierten Transponder vorzugsweise gelocht bzw. genadelt, sodass beim Tiefziehen der Folie 4 Luft zwischen Smart Label 3 und Außenumfang des durch Tiefziehen hergestellten Bechers entweichen kann, wobei durch den in der Kavität 2 angelegten Unterdruck die Luft zwischen Label und Becher abgezogen wird. Hierfür sind auch auf der Umfangsfläche der Kavität 2 Öffnungen zum Anlegen von Unterdruck vorgesehen.

Vorzugsweise wird das Smart Label 3 vor dem Einsetzen in die Kavität 2 vorgeformt, wie dies in DE 102 31 654 beschrieben ist, und dann durch ein Werkzeug aus der Vorform entnommen und in die Tiefziehform 1 eingesetzt.

Fig. 2 zeigt schematisch einen Querschnitt durch die Tiefziehform 1, wobei in der Kavität 2 nicht nur im Bereich des Bodens 2a Unterdruckleitungen 1a münden, sondern auch im Umfangsbereich Unterdruckleitungen 1b vorgesehen sind, die einerseits zum Fixieren des Smart Labels 3 in der Kavität 2 und andererseits zum Absaugen von Luft zwischen dem Label 3 und der tiefgezogenen Folie 4 dienen.

Das Smart Label 3 kann sich um einen Teil des Umfangs der Kavität 2 bzw. des in dieser hergestellten Bechers erstrecken oder auch über den gesamten Umfang.

## Patentansprüche

1. Verfahren zum Aufbringen eines elektronischen Etiketts auf einen durch Tiefziehen hergestellten Gegenstand, wobei das elektronische Etikett (3) in die Kavität (2) einer Tiefziehform (1) eingesetzt und danach der Gegenstand durch Tiefziehen einer erwärmten Folie (4) hergestellt wird, wobei während des Tiefziehens der Folie (4) das elektronische Etikett (3) mit dem Umfang des tiefgezogenen Gegenstands verbunden wird.

2. Verfahren nach Anspruch 1, wobei das elektronische Etikett (3) mit einer Siegelschicht versehen ist, die bei einer Erwärmung bis etwa 80° C eine zuverlässige Verbindung zwischen dem Etikett und dem aus der Folie (4) geformten Gegenstand ergibt.

3. Verfahren nach Anspruch 1, wobei das elektronische Etikett (3) zumindest abschnittsweise gelocht ausgebildet ist.

4. Verfahren nach Anspruch 1, wobei das elektronische Etikett (3) vor dem Einbringen in die Kavität (2) vorgeformt wird und nach dem Vorformen durch ein Werkzeug in die Kavität (2) eingesetzt wird.
